# EUROPEAN PATENT APPLICATION

(11) **EP 2 988 266 A1**
(43) Date of publication of application: **24.02.2016**
(21) Application number: 15182019.8
(22) Date of filing: 21.08.2015
(51) Int. Cl.: G06Q 30/06, G06Q 30/02, G06Q 50/12

(54) **ORDER ENTRY PROCESSING APPARATUS AND METHOD FOR EXECUTING ORDER ENTRY PROCESSING BY THE SAME**

(30) Priority: 22.08.2014 JP 2014169788
(71) Applicant: Toshiba TEC Kabushiki Kaisha, Tokyo 141-0032 (JP)
(72) Inventor: TAMURA, Mitsuyuki, Shinagawa-ku, Tokyo 141-0032 (JP)
(74) Representative: Takeuchi, Maya

(57) **Abstract**

An order entry processing apparatus comprises an input/output unit configured to display information; an article master file which stores a standard cooking time for each article; and a control unit configured to acquire customer identification information for identifying a customer through the input/output unit, receive, from a member server in which an order history is stored for each customer identification information, the order history of a customer specified according to the customer identification information, display in a selectable manner articles included in the received order history on an order history screen output to the input/output unit and send information of article as an order information selected through the order history screen to an order server for managing order information.

## Description

### CROSS-REFERENCE TO RELATED APPLICATION

This application is based upon and claims the benefit of priority from Japanese Patent Application No. 2014-169788, filed August 22, 2014, the entire contents of which are incorporated herein by reference.

### FIELD

Embodiments described herein relate to an order entry processing apparatus and a method for executing an order entry processing by the order entry processing apparatus.

### BACKGROUND

In recent years, a system has been introduced in a restaurant to order dishes or articles by a customer with a tablet-type terminal.

The tablet-type terminal displays a menu on a display unit such as a touch panel, receives an order according to an instruction from a customer and sends the input order to an order entry system.

The order entry system displays the received order on a kitchen terminal installed in a kitchen to display the order to instruct cooking of ordered articles.

The system is advantaged in its capacity to present a plurality of articles for the customer through a simple operation. However, the menu is changed in some cases. In these cases, the customer feels especially troublesome to find his or her favorite dish from the plurality of articles.

To achieve the above objects, there is provided an order entry processing apparatus, comprising:
an input/output unit configured to display information;
an article master file which stores a standard cooking time for each article; and
a control unit configured to acquire customer identification information for identifying a customer through the input/output unit, receive, from a member server in which an order history is stored for each customer identification information, the order history of a customer specified according to the customer identification information, display in a selectable manner articles included in the received order history on an order history screen output to the input/output unit and send information of article as an order information selected through the order history screen to an order server for managing order information.

Preferably, the control unit is configured to display in a gray-out manner an article on the order history screen if the article included in the order history received from the member server is not presented in the article master file.

Preferably still, the control unit is configured to send an settlement instruction to the order server and send sales information as an order history to the member server through the order server if the settlement instruction is input from the input/output unit.

The invention also relates to a method for executing an order entry processing by an order entry processing apparatus having an input/output unit and an article master file, including:
acquiring customer identification information for identifying a customer through the input/output unit;
receiving, from a member server in which an order history is stored for each customer identification information, the order history of a customer specified according to the customer identification information;
displaying in a selectable manner articles included in the received order history on an order history screen output to the input/output unit; and
sending information of article as an order information selected through the order history screen to an order server for managing order information.

Preferably, the method further comprises:
displaying in a gray-out manner an article on the order history screen if the article included in the order history received from the member server is not presented in the article master file.

Preferably still, the method further comprises:
sending an settlement instruction to the order server if the settlement instruction is input from the input/output unit; and
sending sales information as an order history to the member server through the order server.

### DESCRIPTION OF THE DRAWINGS

The above, and other objects, features and advantages of the present invention will be made apparent from the following description of the preferred embodiments, given as non-limiting examples, with reference to the accompanying drawings, in which:
Fig. 1 is a block diagram illustrating the structure of an order processing system comprising an order entry processing apparatus;
Fig. 2 is a block diagram illustrating the structure of a POS terminal;
Fig. 3 is a block diagram illustrating the structure of a management terminal;
Fig. 4 is a block diagram illustrating the structure of an order terminal;
Fig. 5 is a block diagram illustrating the structure of a handy terminal;
Fig. 6 is a block diagram illustrating the structure of an order server;
Fig. 7 is a block diagram illustrating the structure of a kitchen terminal;
Fig. 8 is a block diagram illustrating the structure of a member server;
Fig. 9 is a diagram illustrating the data structure of an article master file;
Fig. 10 is a diagram illustrating the data structure of a transaction file;
Fig. 11 is a diagram illustrating the data structure of an order file;
Fig. 12 is a diagram illustrating the data structure of a history file;
Fig. 13 is a flowchart exemplifying the operation of an order processing system;
Fig. 14 is a flowchart illustrating an ordering operation based on the order history of an order terminal; and
Fig. 15 is a diagram exemplifying an order history screen.

### DETAILED DESCRIPTION

In accordance with an embodiment, an order entry processing apparatus comprises an input/output unit configured to display information; an article master file which stores a standard cooking time for each article; and a control unit configured to acquire customer identification information for identifying a customer through the input/output unit, receive, from a member server in which an order history is stored for each customer identification information, the order history of a customer specified according to the customer identification information, display in a selectable manner articles included in the received order history on an order history screen output to the input/output unit and send information of article as an order information selected through the order history screen to an order server for managing order information.

An embodiment of an order entry processing apparatus is described below with reference to the accompanying drawings.

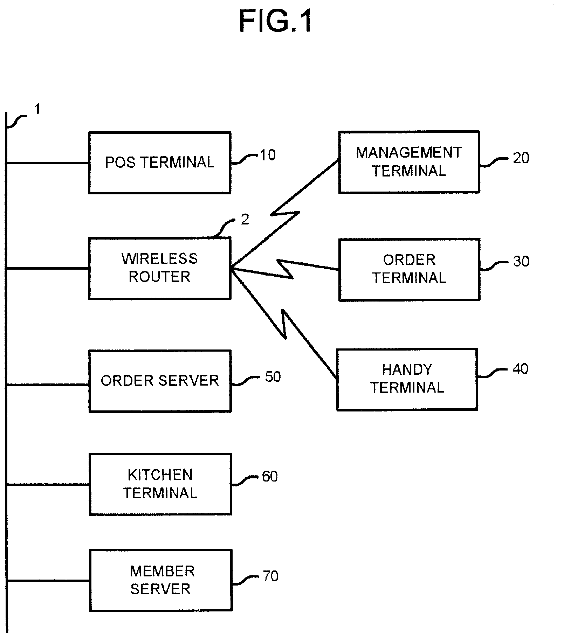

Fig. 1 is a block diagram illustrating the structure of an order processing system including an order entry processing apparatus. As shown in Fig. 1, an order processing system includes a Point of Sales (POS) terminal 10, a management terminal 20, an order terminal 30 serving as an order entry processing apparatus, a handy terminal 40, an order server 50, a kitchen terminal 60 and a member server 70. The order processing system is used in, for example, a restaurant or the like.

The POS terminal 10, the order server 50, the kitchen terminal 60 and the member server 70 are connected with each other via a communication line such as a Local Area Network (LAN) 1. The management terminal 20, the order terminal 30 and the handy terminal 40 are connected with each other via a wireless router 2 connected with the LAN 1.

The POS terminal 10 registers and processes sales information and settles each transaction. The sales information includes sales-details of articles relating to each customer.

The management terminal 20 used by the manager of a store displays the state of a cooking progress, a staff allocation and the state of seated customers.

The order terminal 30 arranged on each dinning table displays a menu and receives an order input by a customer. The order terminal 30 sends the input order information to the order server 50.

The handy terminal 40 is carried by a restaurant staff. In addition to inputting an order, the handy terminal 40 also inputs check-in information as the arrival registration of a customer and article delivery completion information indicating the completion of the delivery of the articles ordered by a customer or customers.

The handy terminal 40 sends the input information to the order server 50.

The order server 50 sends a cooking instruction to the kitchen terminal 60 according to the order information received. Further, if the article delivery completion information is received from the handy terminal, the order information is sent to the POS terminal 10 as sales information.

The kitchen terminal 60 outputs a cooking instruction according to the order information received from the order server 50.

The member server 70 includes a history file 302C which stores an order history according to each member ID uniquely assigned to a customer and sends the order history to the order terminal 30 in response to a query from the order terminal 30.

The order terminal 30 sends an order of the articles specified from the order history to the order server 50.

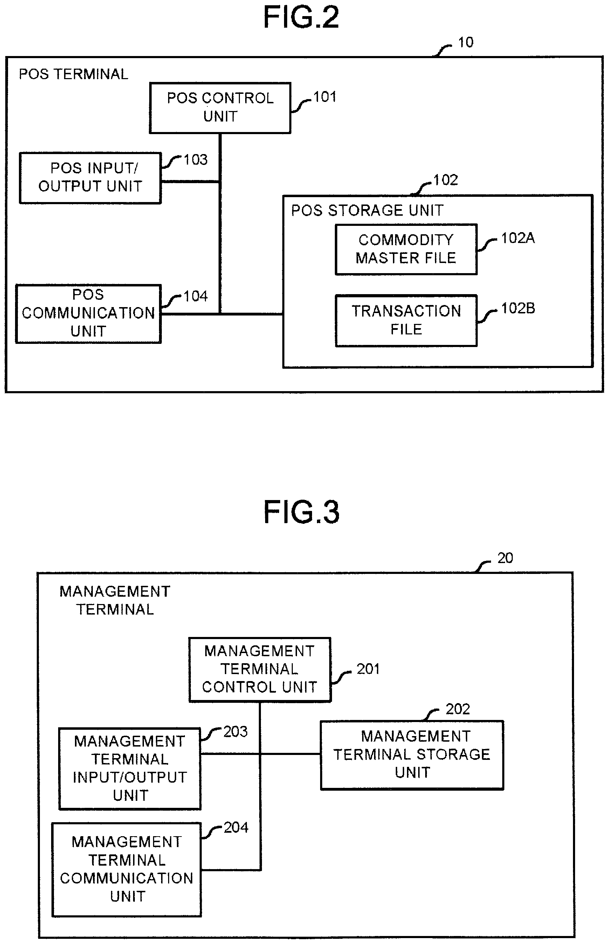

Fig. 2 is a block diagram illustrating the structure of the POS terminal 10. As shown in Fig. 2, the POS terminal 10 includes a POS control unit 101, a POS storage unit 102, a POS input/output unit 103 and a POS communication unit 104.

The POS control unit 101 includes a Central Processing Unit (CPU) serving as a computing device.

The POS storage unit 102 includes a storage device such as a semiconductor memory, a hard disk drive and the like. The POS storage unit 102 stores an article master file 102A and a transaction file 102B.

The POS storage unit 102 stores an order entry processing program, and the POS control unit 101 sequentially reads the order entry processing program from the POS storage unit 102 to execute the order entry processing program.

The article master file 102A stores article information including an article name and a unit price for each article ID uniquely assigned to an article.

The transaction file 102B stores the sales information received from the order server 50 for each transaction.

The POS input/output unit 103 includes input/output devices including a display, keyboard and mouse.

The POS communication unit 104 is connected with the LAN 1 to communicate with external devices.

Fig. 3 is a block diagram illustrating the structure of the management terminal 20. As shown in Fig. 3, the management terminal 20 comprises a management terminal control unit 201, a management terminal storage unit 202, a management terminal input/output unit 203 and a management terminal communication unit 204.

The management terminal control unit 201 includes a CPU serving as a computing device.

The management terminal storage unit 202 includes a storage device such as a semiconductor memory, a hard disk drive and the like. The management terminal storage unit 202 stores order entry processing program, and the management terminal control unit 201 sequentially reads the order entry processing program from the management terminal storage unit 202 to execute the order entry processing program.

The management terminal input/output unit 203 includes input/output devices including a display, keyboard and mouse.

The management terminal communication unit 204 is connected with the LAN 1 via a wireless router 2 to communicate with external devices

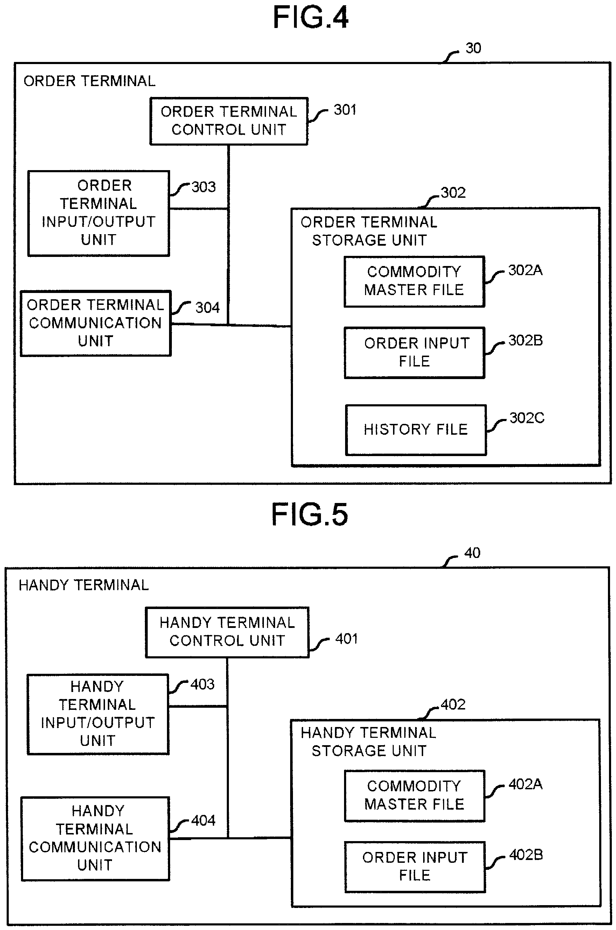

Fig. 4 is a block diagram illustrating the structure of the order terminal 30. As shown in Fig. 4, the order terminal 30 includes an order terminal control unit 301, an order terminal storage unit 302, an order terminal input/output unit 303 and an order terminal communication unit 304.

The order terminal control unit 301 includes a CPU serving as a computing device.

The order terminal storage unit 302 includes a storage device such as a semiconductor memory, a hard disk drive and the like. The order terminal storage unit 302 stores an article master file 302A which stores the same content as the article master file 102A, an order input file 302B for storing order information and a history file 302C for temporarily storing the order history of a member received from the member server 70.

The order terminal storage unit 302 stores an order entry processing program, and the order terminal control unit 301 sequentially reads the order entry processing program from the order terminal storage unit 302 to execute the order entry processing program.

The order terminal input/output unit 303 includes an input/output device, for example, a touch panel.

The order terminal communication unit 304 is connected with the LAN 1 via the wireless router 2 to communicate with external devices

The order terminal 30 may be a computer, and especially, a tablet terminal.

Fig. 5 is a block diagram illustrating the structure of the handy terminal 40. As shown in Fig. 5, the handy terminal 40 comprises a handy terminal control unit 401, a handy terminal storage unit 402, a handy terminal input/output unit 403 and a handy terminal communication unit 404.

The handy terminal control unit 401 includes a CPU serving as a computing device.

The handy terminal storage unit 402 includes a storage device such as a semiconductor memory, a hard disk drive and the like. The handy terminal storage unit 402 stores an article master file 402A which stores the same content as the article master file 102A and an order input file 402B which stores order information.

The handy terminal storage unit 402 stores an order entry processing program, and the handy terminal control unit 401 sequentially reads the order entry processing program from the handy terminal storage unit 402 to execute the order entry processing program.

The handy terminal input/output unit 403 includes input/output devices including a touch panel, display, and keyboard.

The handy terminal communication unit 404 is connected with the LAN 1 via the wireless router 2 to communicate with external devices

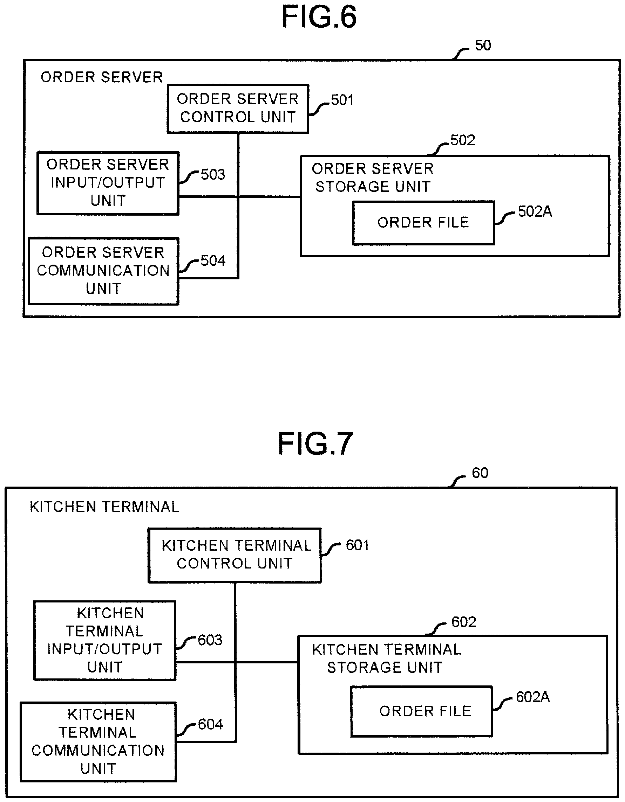

Fig. 6 is a block diagram illustrating the structure of the order server 50. As shown in Fig. 6, the order server 50 comprises an order server control unit 501, an order server storage unit 502, an order server input/output unit 503 and an order server communication unit 504.

The order server control unit 501 includes a CPU serving as a computing device.

The order server storage unit 502 includes a storage device such as a semiconductor memory, a hard disk drive and the like. The order server storage unit 502 stores an order file 502A in which order information is stored.

The order server storage unit 502 stores an order entry processing program, and the order server control unit 501 sequentially reads the order entry processing program from the order server storage unit 502 to execute the order entry processing program.

The order server input/output unit 503 includes input/output devices including a display, keyboard and mouse.

The order server communication unit 504 is connected with the LAN 1 to communicate with external devices.

Fig. 7 is a block diagram illustrating the structure of the kitchen terminal 60. As shown in Fig. 7, the kitchen terminal 60 comprises a kitchen terminal control unit 601, a kitchen terminal storage unit 602, a kitchen terminal input/output unit 603 and a kitchen terminal communication unit 604.

The kitchen terminal control unit 601 includes a CPU serving as a computing device.

The kitchen terminal storage unit 602 includes a storage device such as a semiconductor memory, a hard disk drive and the like. The kitchen terminal storage unit 602 stores an order file 602A in which order information is stored.

The kitchen terminal storage unit 602 stores an order entry processing program, and the kitchen terminal control unit 601 sequentially reads the order entry processing program from the kitchen terminal storage unit 602 to execute the order entry processing program.

The kitchen terminal input/output unit 603 includes input/output devices including a display, keyboard and mouse.

The kitchen terminal communication unit 604 is connected with the LAN 1 to communicate with external devices.

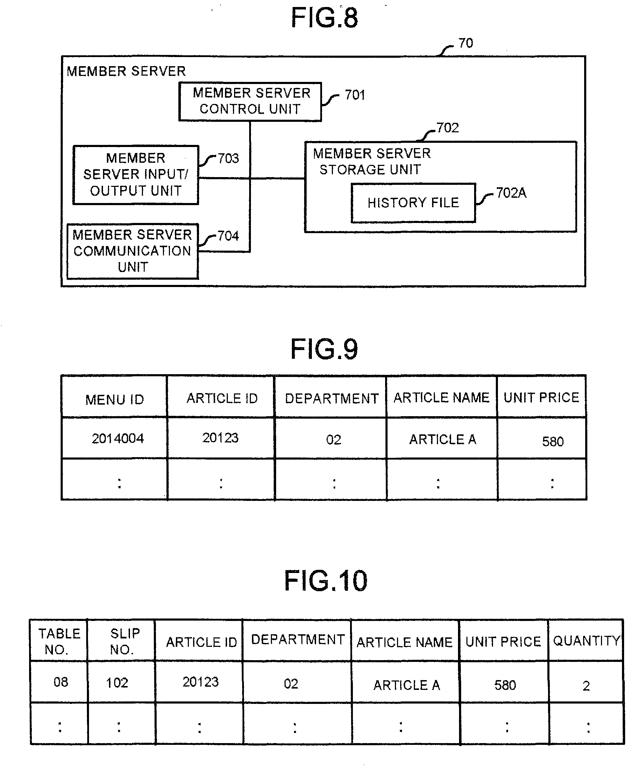

Fig. 8 is a block diagram illustrating the structure of the member server 70. As shown in Fig. 8, the member server 70 comprises a member server control unit 701, a member server storage unit 702, a member server input/output unit 703 and a member server communication unit 704.

The member server control unit 701 includes a CPU serving as a computing device.

The member server storage unit 702 includes a storage device such as a semiconductor memory, a hard disk drive and the like. The member server storage unit 702 stores a history file 702A in which the order history of each member is stored corresponding to a member ID uniquely assigned to each customer.

The member server storage unit 702 stores an order entry processing program, and the member server control unit 701 sequentially reads the order entry processing program from the member server storage unit 702 to execute the order entry processing program.

The member server input/output unit 703 includes input/output devices including a display, keyboard and mouse.

The member server communication unit 704 is connected with the LAN 1 to communicate with external devices.

Fig. 9 is a schematic diagram illustrating the data structure of the article master file 102A. As shown in Fig. 9, the article master file 102A stores 'article ID' which is an identifier uniquely assigned to an article, 'department' representing a handling department, 'article name' representing the name of an article and 'unit price' representing the price for each unit amount of an article.

In an example, the article ID is '20123', the department is '02', the article name is 'article A', and the unit price is '580'.

The article master files 302A and 402A have the same data structure with the article master file 102A.

Fig. 10 is a schematic diagram illustrating the data structure of the transaction file 102B. As shown in Fig. 10, the transaction file 102B stores 'table No.', 'slip No.', 'article ID', 'department', 'article name', 'unit price' and 'quantity', wherein 'table No.' is an identifier uniquely assigned to a table, 'slip No.' is an identifier uniquely assigned to one transaction, and 'quantity' represents a sales quantity.

In an example, the table No. is '08', the slip No. is '102', the article ID is '20123', the department is '02', the article name is 'article A', the unit price is '580' and the quantity is '2'.

The order input files 302B and 402B have the same data structure with the transaction file 102B.

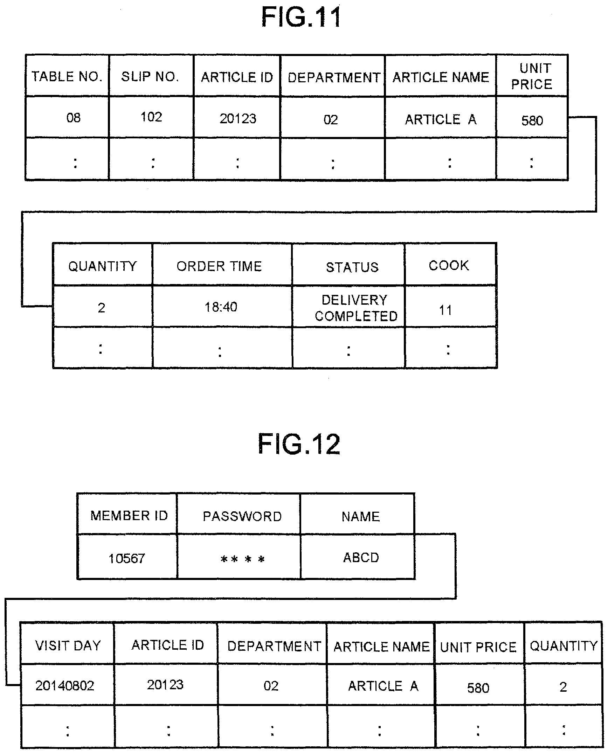

Fig. 11 is a diagram illustrating the data structure of the order files 502A and 602A. As shown in Fig. 11, the order files 502A and 602A store 'table No.', 'slip No.', 'article ID', 'department', 'article name', 'unit price', 'quantity', 'order time', 'status' and 'cooking in charge', wherein 'quantity' represents the quantity of an ordered article, 'order time' refers to the time at which the article is ordered, 'status' is an identifier representing the state of a progress, and 'cooking in charge' is an identifier representing a person who cooks the article.

In an example, the table No. is '08', the slip No. is '102', the article ID is '20123', the department is '02', the article name is 'article A', the unit price is '580', the quantity is '2', the order time is '18:40', the status is 'delivery completed' and the cooking in charge is '11'.

Fig. 12 is a diagram illustrating the data structure of the history file 702A. As shown in Fig. 12, the history file 702A stores 'member ID.', 'password', 'name' indicating a name of a customer, 'visit day', 'article ID' representing an article ordered by the customer, 'department', 'article name', 'unit price' and 'quantity', wherein 'member ID' is identification information uniquely assigned to a customer, 'password' is an identifier for authenticating a member, and 'visit day' indicates the date the customer visits the restaurant.

In an example, the member ID is '10567', the password is '****', the name is 'ABCD', the visit day is '20140802', the article ID is '20123', the department is '02', the article name is 'article A', the unit price is '580' and the quantity is '2'.

The history file 302C has the same data structure as the history file 702A.

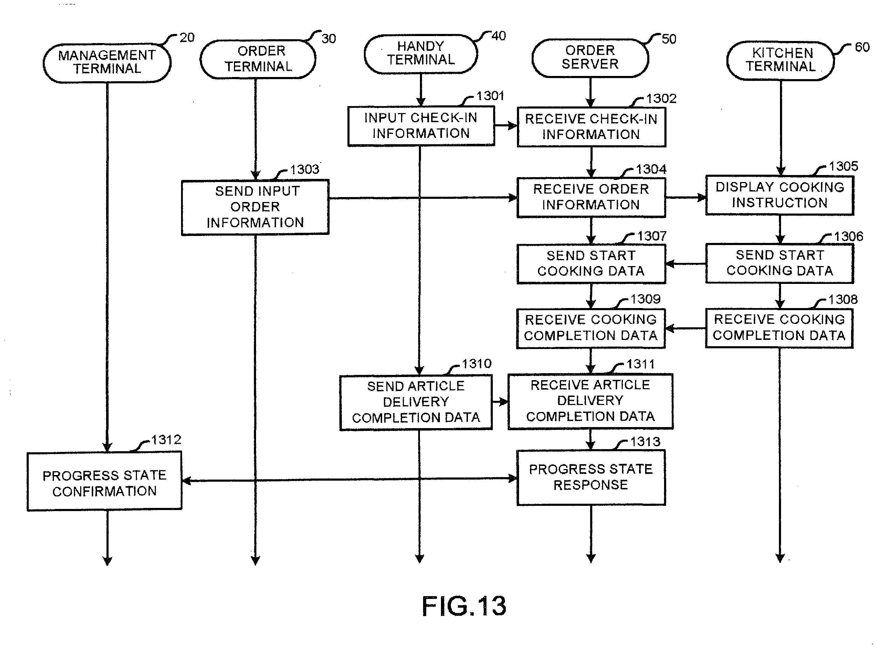

Fig. 13 is a flowchart exemplifying the operation of an order processing system. As shown in Fig. 13, in Act 1301, the handy terminal control unit 401 of the handy terminal 40 sends the order server 50 check-in information which represents that a customer visits the restaurant and takes a seat according to an instruction from the operator.

In Act 1302, the order server control unit 501 of the order server 50 receives the check-in information from the handy terminal 40. The order server control unit 501 assigns a slip No. to the table No. indicating a table that the customer takes, and allows the handy terminal 40 and the order terminal 30 to receive an order thereafter.

In Act 1303, the order terminal control unit 301 of the order terminal 30 displays a menu screen on the touch panel of the order terminal input/output unit 303. The order terminal control unit 301 sends an order input to the order server 50 as order information according to an instruction from the customer.

In Act 1304, the order server control unit 501 receives the order information. The order server control unit 501 sends the received order information to the kitchen terminal 60.

In Act 1305, the kitchen terminal control unit 601 of the kitchen terminal 60 displays an order screen 1601 containing a cooking instruction on the display of the kitchen terminal input/output unit 603 according to the order information.

In Act 1306, the kitchen terminal control unit 601 inputs data representing the start of cooking according to an instruction from a person in charge of cooking and sends information indicating the start of cooking to the order server 50.

In Act 1307, the order server control unit 501 receives the information indicating the start of cooking. The order server control unit 501 stores the received information indicating the start of the cooking in the order file 502A.

In Act 1308, the kitchen terminal control unit 601 inputs,at the timing the cooking of the article (dish) is finished, data indicating the completion of cooking according to an instruction from the person in charge of cooking and sends the order server 50 the data indicating the completion of cooking for each article ID together with a table No. and a slip No..

In Act 1309, the order server control unit 501 receives the data indicating the completion of cooking. The order server control unit 501 retrieves the order file 502A according to the received table No. and slip No. and the article ID and stores the data representing the completion of cooking in the status of the retrieved data if the data are matched.

In Act 1310, the handy terminal control unit 401 sends data indicating the completion of the delivery of articles to the order server 50 together with the table No., the slip No. and the article ID according to an instruction from the operator.

In Act 1311, the order server control unit 501 receives the data indicating the completion of the delivery of articles. The order server control unit 501 retrieves the order file 502A according to the received table No., slip No. and article ID and stores the data representing the completion of the delivery of articles in the status of the retrieved data if the data are matched.

In Act 1312, the management terminal control unit 201 of the management terminal 20 sends, according to an instruction from the manager, data instructing confirmation of a status of a progress to the order server 50.

In Act 1313, the order server control unit 501 reads the data in the slip No. contained in the current check-in information from the order file 502A as a process state data and sends the read data to the management terminal 20 as a response.

The management terminal control unit 201 displays a management screen on the touch panel or the display of the management terminal input/output unit 203 according to the received progress state data. The management terminal control unit 201 displays floor information and the state of an order processing on the management screen.

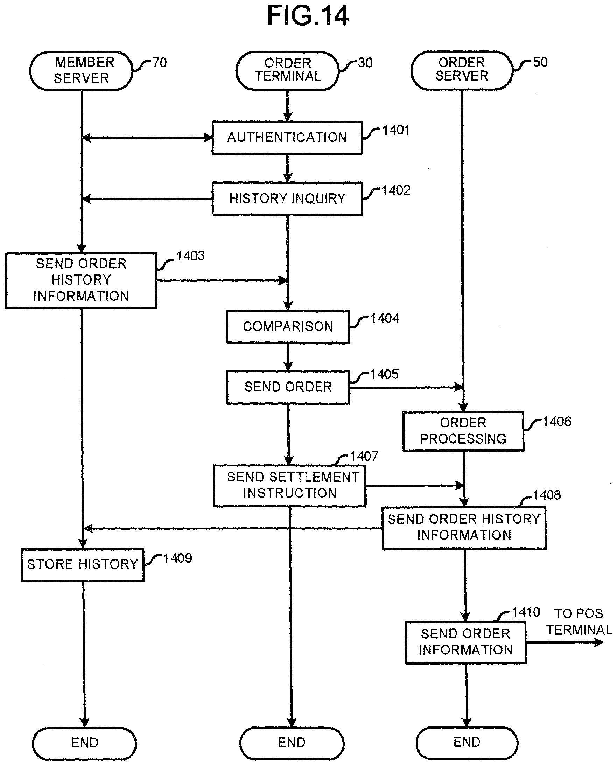

Fig. 14 is a flowchart illustrating an ordering operation based on the order history of the order terminal 30. As shown in Fig. 14, in Act 1401, the order terminal control unit 301 sends an input member ID and password to the member server 70 for authentication. If the input member ID and password are successfully authenticated by the order terminal control unit 301, the member ID is acquired as customer identification information, and Act 1402 is taken, otherwise, an error screen is displayed on the order terminal input/output unit 303.

In Act 1402, the order terminal control unit 301 sends an inquiry of order history together with a member ID to the member server 70.

In Act 1403, the member server control unit 701 retrieves the history file 702A according to the received member ID and sends order history information specified with the member ID to the order terminal 30.

In Act 1404, the order terminal control unit 301 compares the article ID in the received order history with the article ID in the article master file 302A to determine an article ID that is not presented in the article master file 302A as a sold-out article.

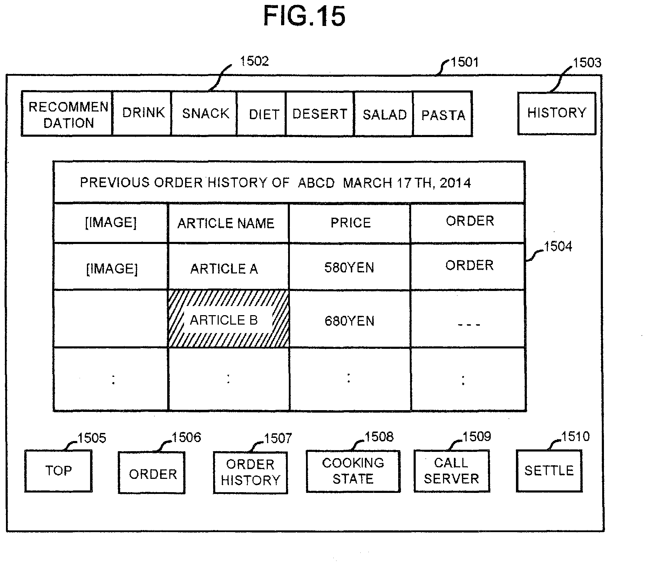

The order terminal control unit 301 displays, for example, the order history screen 1501, shown in Fig. 15, which shows the sold-out article in a gray-out manner on the order terminal input/output unit 303. The order terminal control unit 301 displays, on the order history screen 1501, the order history in which articles that can be ordered are shown in a selectable manner.

In Act 1405, the order terminal control unit 301 sends the order specified by the customer on the order history screen 1501 to the order server 50 as order information.

In Act 1406, the order server control unit 501 stores the received order information in the order file 502A and sends the order information to the kitchen terminal 60.

In Act 1407, the order terminal control unit 301 sends a settlement instruction to the order server 50 together with the member ID.

In Act 1408, the order server control unit 501 sends the order history to the member server 70 together with the member ID.

In Act 1409, the member server control unit 701 stores the received order history in the history file 702A for each member ID.

In Act 1410, the order server control unit 501 sends order information to the POS terminal 10 as a sales information.

Fig. 15 is a diagram exemplifying an order history screen 1501. As shown in Fig. 15, the order history screen 1501 includes a category button 1502 indicating the category of an article, a history button 1503 for displaying an order history and a column 'order history' 1504 representing the details of an order history.

The column 'order history' 1504 includes 'article picture', 'article name', 'price' and a button 'order' for instructing the order of the article. Further, the order terminal control unit 301 displays in a gray-out manner the article name of an article which is determined as a sold-out article in Act 1404 show in Fig. 14.

If it is determined that the button 'order' is pressed, the order terminal control unit 301 determines that the article is selected and sends the article ID of the article and a quantity which is separately input to the order server 50 as an order information.

The order history screen 1501 also displays a button 'TOP' 1505 for instructing the return to the initial screen, a button 'order' 1506 for instructing the addition of an order and a button 'order history' 1507 for displaying the order history which includes the order already done in the same day. The order history screen 1501 further displays a button 'cooking state' 1508 for instructing the display of the state of an ordered article, a button 'call server ' 1509 for calling a waiter or waitress and a button 'settle' 1510 for instructing the settlement of a completed transaction.

When an order history is displayed by pressing an 'order history' button 1507, the order terminal control unit 301 further displays a button 'cancel' to receive cancel of a specified article according to an instruction from the customer.

As stated above, the order terminal 30 of the present embodiment receives the order history of each member ID from the member server 70, displays an order history screen 1501 on the order terminal input/output unit 303 according to the received order history and sends the order information input through the order history screen 1501 to the order server 50.

Thus, the customer can select an article from his or her order history and order his or her favorable article easily.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. An order entry processing apparatus, comprising:
an input/output unit configured to display information;
an article master file which stores a standard cooking time for each article; and
a control unit configured to acquire customer identification information for identifying a customer through the input/output unit, receive, from a member server in which an order history is stored for each customer identification information, the order history of a customer specified according to the customer identification information, display in a selectable manner articles included in the received order history on an order history screen output to the input/output unit and send information of article as an order information selected through the order history screen to an order server for managing order information.

2. The order entry processing apparatus according to claim 1, wherein
the control unit is configured to display in a gray-out manner an article on the order history screen if the article included in the order history received from the member server is not presented in the article master file.

3. The order entry processing apparatus according to claim 1 or 2, wherein
the control unit is configured to send an settlement instruction to the order server and to send sales information as an order history to the member server through the order server if the settlement instruction is input from the input/output unit.

4. A method for executing an order entry processing by an order entry processing apparatus having an input/output unit and an article master file, including:
acquiring customer identification information for identifying a customer through the input/output unit;
receiving, from a member server in which an order history is stored for each customer identification information, the order history of a customer specified according to the customer identification information;
displaying in a selectable manner articles included in the received order history on an order history screen output to the input/output unit; and
sending information of article as an order information selected through the order history screen to an order server for managing order information.

5. The method according to claim 4 further including:
displaying in a gray-out manner an article on the order history screen if the article included in the order history received from the member server is not presented in the article master file.

6. The method according to claim 4 or 5 further including:
sending an settlement instruction to the order server if the settlement instruction is input from the input/output unit; and
sending sales information as an order history to the member server through the order server.
